# EUROPEAN PATENT SPECIFICATION

(11) **EP 0 863 300 B1**
(45) Date of publication and mention of the grant of the patent: **28.11.2001**
(21) Application number: 97103705.6
(22) Date of filing: 06.03.1997
(51) Int. Cl.: F02B 43/00, F02D 19/02

(54) **Equipment for feeding an internal combustion engine with a gaseous fuel**
Vorrichtung zur Speisung einer Brennkraftmaschine mit gasförmigem Brennstoff
Equipement pour alimenter un moteur à combustion interne en carburant gazeux

(43) Date of publication of application: 09.09.1998
(73) Proprietor: Florgas di Dall'Aglio, Loris, 47100 Rovigo (IT)
(72) Inventor: Dall'Aglio, Loris, Mr., 45100 Rovigo (IT)
(74) Representative: Rinaldi, Carlo

(56) References cited:
- EP-A- 0 060 656
- EP-A- 0 761 951
- WO-A-89/00640
- WO-A-92/11448
- WO-A-95/22691
- DE-A- 19 622 105
- DE-U- 29 520 410
- REVUE TECHNIQUE AUTOMOBILE, vol. 51, no. 581, 1 February 1996, BOULOGNE-BILLANCOURT, pages XXXIX-LVII, XP000555194 "Alimentation"

## Description

### BACKGROUND OF THE INVENTION

The present invention relates to an equipment for feeding an internal combustion engine with a gaseous fuel as defined in the preamble of claim 1.

Equipments which feed internal combustion engines with gaseous fuels are known, said equipments comprising mixture supplying and metering devices which control the mixture strength in accordance with the values of the signal coming from an oxygen sensor. These equipments are used to reduce the concentration of pollutants coming out of the engine exhaust manifold, said pollutants undergoing a process of oxidation-reduction inside a catalytic muffler, in order to use economical fuels, the equipments being installed in all common vehicles without particular expedients.

By using these equipments it is possible to maintain good performances of the vehicle and a drivability like the drivability of the vehicles fed by the most expensive liquid fuels.

### STATE OF THE TECHNIQUE

EP-A-0 563 223 relates to an equipment for injecting a gaseous fuels into engines with several cylinders; the equipment consists of a vaporiser/pressure regulator; a metering device sends the fuel from the vaporiser to the inlet valve of each cylinder; an injection valve is located in each intake pipe near the inlet of each cylinder for maintaining a constant pressure between the metering device and each inlet valve; the metering device presenting separate metering apertures, each aperture belonging to its own cylinder and connected by means of a separate pipe of its own to that cylinder.

In addition, the injection valve presents a valve seat and a valve disc interacting therewith; the valve disc is in the form of a diaphragm located in the body of the injection valve; the diaphragm is stretched in such a way in the valve housing that said diaphragm when under no load just rests against the valve seat. The atmospheric pressure acts on a side of the diaphragm.

Substantially, the equipment described in EP-A-0 563 223 presents the following disadvantages:
A- The metering device consists essentially of a cavity connected to the cylinders by means of separate apertures; during the operating of the engine, the fluids which are in the cavity are subjected to pulsations owing to the alternating strokes of the engine thermodynamic and mechanic cycle; these pulsations change the flow-rate and strength of the mixture feeding the engine combustion chambers;
B- Essentially, each injection valve presents a valve seat and a valve disc interacting therewith; the valve disc is in the form of a diaphragm located in the body of the injection valve; the diaphragm is stretched in such a way in the valve housing that said diaphragm when under no load just rests against the valve seat. The side of the diaphragm not loaded by the fuel pressure is connected to the atmosphere, the pressure of which depends on the altitude and other known causes; therefore, the process of carburation depends on these causes in an uncontrolled way.

WO - A - 95122691 discloses an equipment for feeding an internal combustion engine with a gaseous fuel comprising: a feeding system for the gaseous fuel, a system for sending air to an engine, a throttle valve for controlling the flow rate of the air the air sucked by the engine, a plurality of injection valve (pulse width modulated injector valves) suitable for metering and sending the gaseous fuel to the combustion chambers of the engine, each injection valve being adapted to be connected to its own combustion chamber, at least an oxygen sensor, a plurality of sensors capable of measuring the operating parameters of the engine, said sensors being connected to a central control unit, acting on the injection valves in accordance with the operating parameters of the engine measured by said sensors.

Also DE-A- 19622106 discloses a similar gaseous fuel feeding equipment.

In these and other documents of prior art no injection valve is provided consisting of a metering valve connected to a pressure reducer and a timed valve having a control chamber only connected to the inlet manifold upstream of the throttle valve; a connecting pipe connecting the metering valve to the timed valve and a delivery tube joining the timed valve to the inlet pipe so that each injection valve can send the gaseous fuel near the inlet valve of the combustion chamber corresponding to its own injection valve. This configuration allows a quick heating of the fuel owing to the contact with the inlet valves; therefore a better homogeneity of the air/fuel mixture is obtained.

The invention, as claimed, solves the problem of creating an equipment for feeding an internal combustion engine with a gaseous fuel; the equipment comprising an engine working with a gaseous fuel and presenting a number of combustion chambers, an intake manifold having branches forming inlet pipes, each connected to its own combustion chamber, a feeding system for the gaseous fuel, a system for sending air to the engine, a throttle valve for controlling the flow rate of the air sucked by the engine, a plurality of injection valves metering and sending the gaseous fuel to the combustion chambers, each injection valve being connected to its own combustion camber, at least an oxygen sensor placed in the exhaust system of the engine, a plurality of sensors measuring the operating parameters of the engine, said sensors being connected to a permanent memory central control unit acting, in every instant, on the injection valves in accordance with the operating parameters of the engine measured by said sensors, wherein each injection valve consists of a metering valve connected to a pressure reducer and a timed valve having a control chamber, only connected to the intake manifold upstream of the throttle valve, a connecting pipe joining the metering valve to the timed valve, while a delivery tube connects the timed valve to the inlet pipe so that each injection valve can send the gaseous fuel near the inlet valve of its own combustion chamber.

### AIM OF THE INVENTION

The purpose of this invention is to remedy these defects.

### BRIEF DESCRIPTION OF THE DRAWINGS

Other advantages, features and aims of the invention, may be more readily understood by referring to the accompanying drawings, which concern preferred embodiments, in which:
Fig.1 is a block diagram of the equipment with a first embodiment of the central control unit;
Fig.2 shows schematically a metering valve connected to a diaphragm shaped timed valve used in the equipment, the timed valve being in a first position;
Fig.3 shows schematically the metering valve connected to the diaphragm shaped timed valve in a second position;
Fig.4 illustrates schematically a plate shaped timed valve used in the equipment instead of the diaphragm shaped valve, the timed valve being in a first position;
Fig.5 shows schematically the plate shaped timed valve in a second position;
Fig.6 is a block diagram of the equipment presenting a second embodiment of the central control unit;
Fig.7 is a block diagram of the first embodiment of the central control unit;
Fig.8 is a block diagram of the second embodiment of the central control unit;
Fig.9 is a flow chart of the central control unit comprising a memory network for the changes of the engine operating diagram.

### DESCRIPTION OF PREFERRED EMBODIMENTS OF THE INVENTION

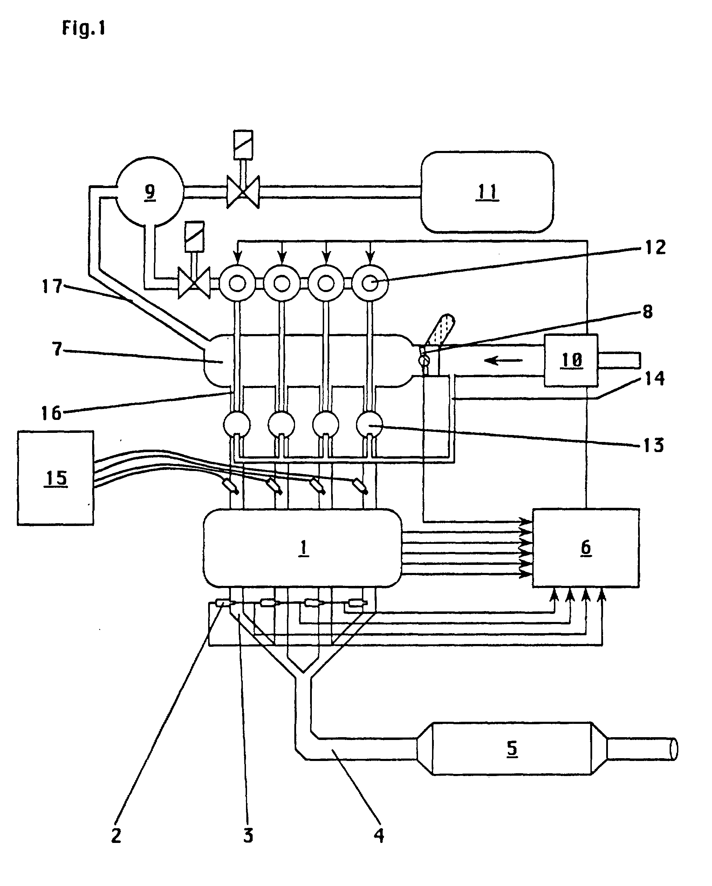

The equipment of Fig.1 comprises an internal combustion engine 1 and at least an oxygen sensor 2 being located in an exhaust pipe 3 of a combustion chamber 37; the oxygen sensor signal presenting two values which indicate, respectively, a lean and a rich mixture strength.

The exhaust pipes 3 flow into an exhaust manifold 4 fitted with a catalytic muffler 5, in which the reactions of oxidisation-reduction take place to reduce the pollutants coming out of the engine 1.

In addition, the engine 1 presents an intake manifold 7 fitted with a body which houses a throttle valve 8, a filter 10 for the air sucked by the combustion chambers 37, a tie rod of the accelerator for manoeuvring the throttle valve 8, a cooling system, a feeding system for a liquid fuel, and other movements or mechanic elements (not represented) which are usually installed in the common internal combustion engines for motor-vehicles.

The intake manifold 7 branches in four inlet pipes 16, each of which feeds its own combustion chamber 37.

The equipment also comprises a tank 11 for a gaseous fuel (methane or l.p.g.) fitted with a gas level or pressure sensor measuring the fuel quantity in the tank 11. A pressure reducer 9 is connected to the tank 11 and to four injection valves, each comprising a metering valve 12 and a timed valve 13; the tank 11 being connected to the intake manifold 7 by means of a compensating line 17 for compensating the pressure changes taking place in the tank 11. A canalisation 14 connects each timed valve 13 to the intake manifold 7 upstream of the throttle valve 8.

A central control unit 6 is electrically connected to the metering valves 12 to send control signals to said valves 12 in accordance with the values of the engine operating parameters measured by the oxygen sensors and other sensors of the engine operating condition.

An electrical control unit 15 is originally installed in the vehicle for controlling the injection valves delivering the liquid fuel when the engine 1 is fed by this fuel.

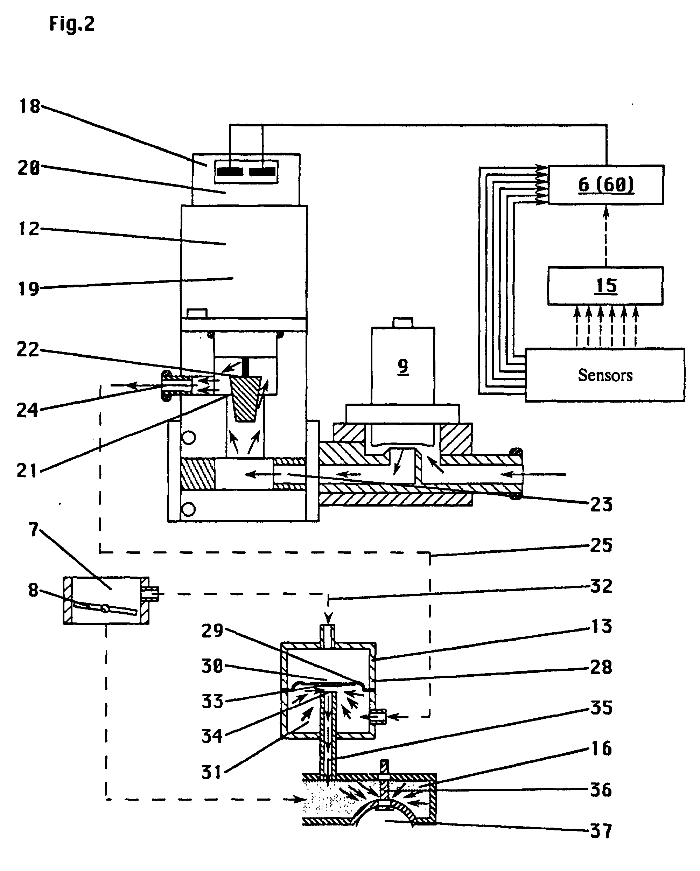

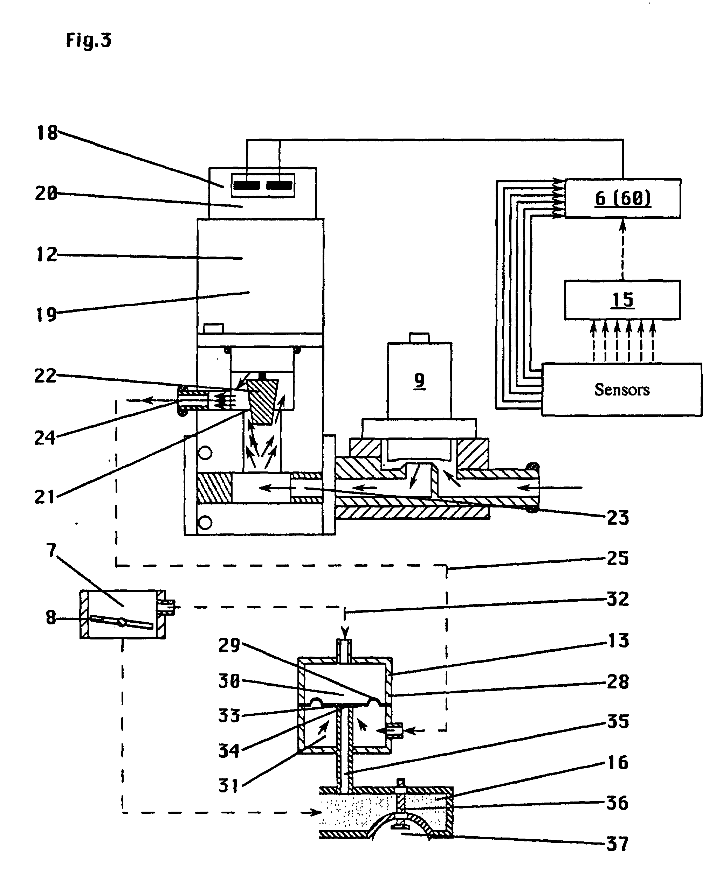

In Figs 2 and 3 an injection valve 18 is represented consisting of a metering valve 12 connected to the pressure reducer 9 and a timed valve 13 connected to the intake manifold upstream of the throttle valve 8. The metering valve 12 consists of a body 19 supporting a step motor 20 electrically connected to the unit 6 (60). Inside the body 19 a passage section 21 for the gas is defined; this passage section 21 being controlled by a movable shutter 22 shaped like a truncated-cone mechanically connected to the step motor 20; the passage section 21 is between an inlet 23, connected to the pressure reducer 9, and an outlet 24 connected to the timed valve 13. The area of the passage section 21 varies with the displacement of the movable shutter 22 to adjust the gas flow-rate in accordance with the variations of the engine operating parameters.

The timed valve 13 is connected to the outlet 24 of the metering valve 12 by means of a connecting pipe 25; the timed valve 13 consists of a sealed box 28 housing a diaphragm 29 dividing the box 28 into two separate chambers 30,31 which do not communicate to each other. The first chamber 30 is connected to the intake manifold 7 upstream of the throttle valve 8 by means of a canalisation 32 (shown with the reference number 14 in Fig.1), while the second chamber 31 is connected to the outlet 24 of the metering valve 12 by means of the connecting pipe 25. A plate 33 integral with the diaphragm 29 acts on an outlet orifice 34 of a delivery tube 35 connecting the chamber 31 to the inlet pipe 16 in accordance with the vacuum existing inside the inlet pipe 16 upstream of the inlet valve 36.

When the inlet valve 36 is open the plate 33 closes the outlet orifice 34 since the difference between the pressure inside the inlet pipe 16 and the pressure inside the chamber 31 is high; when the inlet valve 36 is closed the plate 33 opens the outlet orifice 34 since this difference is low. When the outlet orifice 34 is open (Fig.2) the gas metered by the valve 12 reaches the inlet pipe 16 and accumulates near the inlet valve 36 before entering the combustion chamber 37 together with the air coming from the intake manifold 7 during the opening phase of the inlet valve 36.

When the outlet orifice 34 is closed (Fig.3), the gas does not come out from the chamber 31.

The timed valve 13 has the function of compensating the pressure peaks due to the succession of the strokes of the engine 1 and of injecting the gas into the its own combustion chamber 37 in phase with the opening of the relevant inlet valve 36.

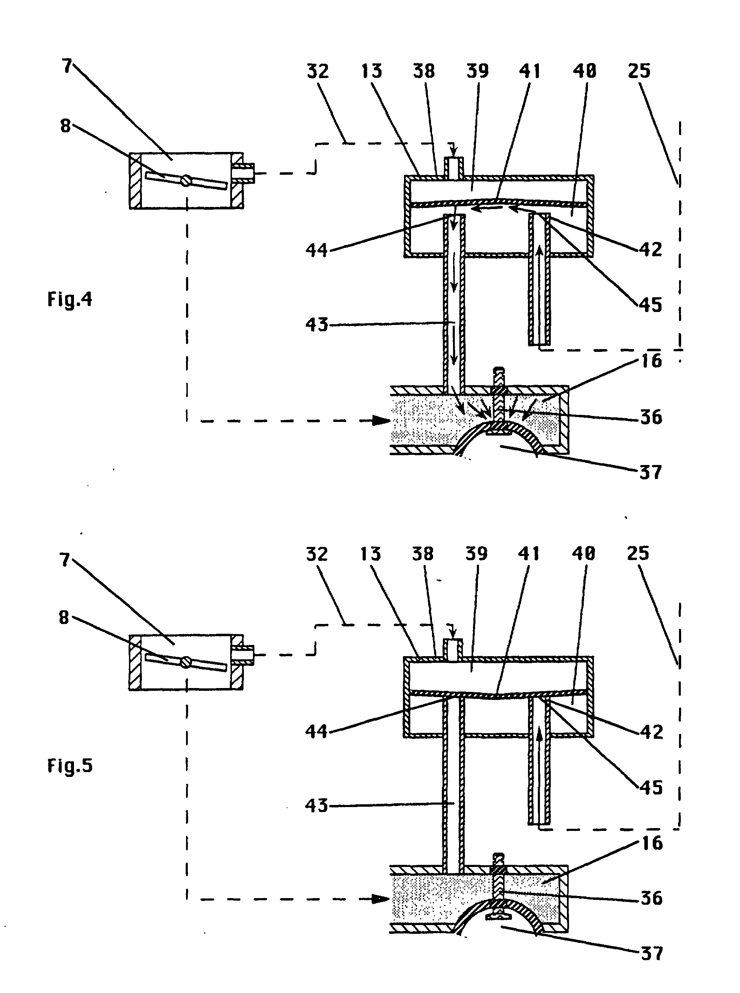

The timed valve 13 shown in Figs 4, 5 consists of a sealed box 38; two chambers 39, 40 defined inside of the box 38 are hermetically separated from each other by means of a thin elastic plate 41 which deforms when stressed by the forces of the pressure existing in the chambers 39, 40.

The third chamber 39 is connected to the intake manifold 7 upstream of the throttle valve 8 by means of the canalisation 32 (shown with the reference number 14 in Fig.1), while the fourth chamber 40 is connected to the outlet 24 of the metering valve 12 by means of the connecting pipe 25.

Two tubes 42 and 43 are introduced into the chamber 40; the first tube 42 is connected to the connecting pipe 25, while the second tube 43 connects the chamber 40 to the inlet pipe 16 upstream of the inlet valve 36.

An inlet orifice 44 is provided at the end of the tube 43 which is disposed inside the chamber 40, while an outlet orifice 45 opens at the end of the tube 42 introduced into the chamber 40.

The plate 41 is so shaped that it faces its concavity downwards when the gas pressure in the chamber 40 is higher than the gas pressure in the chamber 39 in order to maintain both orifices 44, 45 open, while it faces its concavity upwards when the gas pressure in the chamber 40 is lower than the pressure of the gas in the chamber 39 in order to close both orifices 44, 45. In both geometrical configurations the plate 41 adheres to the internal wall of the box 28 so that it maintains the chamber 39 isolated from the chamber 40.

When the inlet valve 36 is closed (Fig.4) the pressure in the chamber 40 is higher than the pressure in the chamber 39 and the plate 41 faces its concavity downwards; therefore, the gas metered by the valve 12 through the inlet pipe 16 accumulates near the inlet valve 36 to enter the combustion chamber 37 together with the air coming from the intake manifold 7 in the subsequent opening phase of the inlet valve 36. When the inlet valve 36 is open (Fig.5) the pressure in the chamber 40 is lower than the pressure in the chamber 39 and the plate 41 faces its concavity upwards to close both orifices 42, 44.

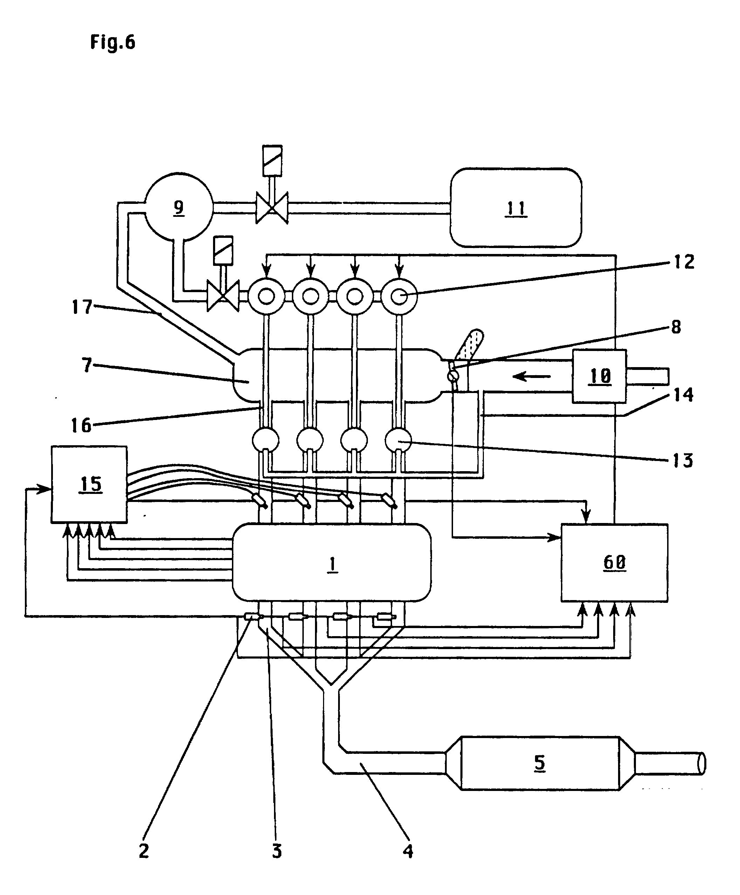

The equipment of Fig.6 differs from that of Fig.1 only in the fact that the central control unit 60 receives signals from the electrical control unit 15 originally installed in the vehicle to define, in every moment, the position of the movable shutter 22 in accordance with the operating parameters of the engine 1 processed by the electrical control unit 15. The central control unit 60 is also connected to the throttle valve angular position sensor and to the oxygen sensors for controlling the movable shutter 22 on the basis of the values of the signals of these sensors to take into account the quality of fuel used and other known causes.

In addition to the oxygen sensors 2 other sensors are provided measuring the different operating parameters of the engine 1: the sensor 46 measures the cooling water temperature defining the engine thermal state; the sensor 47 measures the throttle valve angular position indicating the engine operating condition (idling, full load, etc.); the sensor 48 measures the vacuum in the intake manifold downstream of the throttle valve 8 to indicate the load applied to the engine 1; the sensor 49 measures the engine revolution speed; the sensor 50 measures the temperature of the air sucked by the engine 1; the sensor 51 measures the flow-rate of the air sucked by the engine 1. Said sensors are connected to the central control unit 6 acting, in every instant, on the injection valves 18 in accordance with the engine operating parameters of the measured by said sensors.

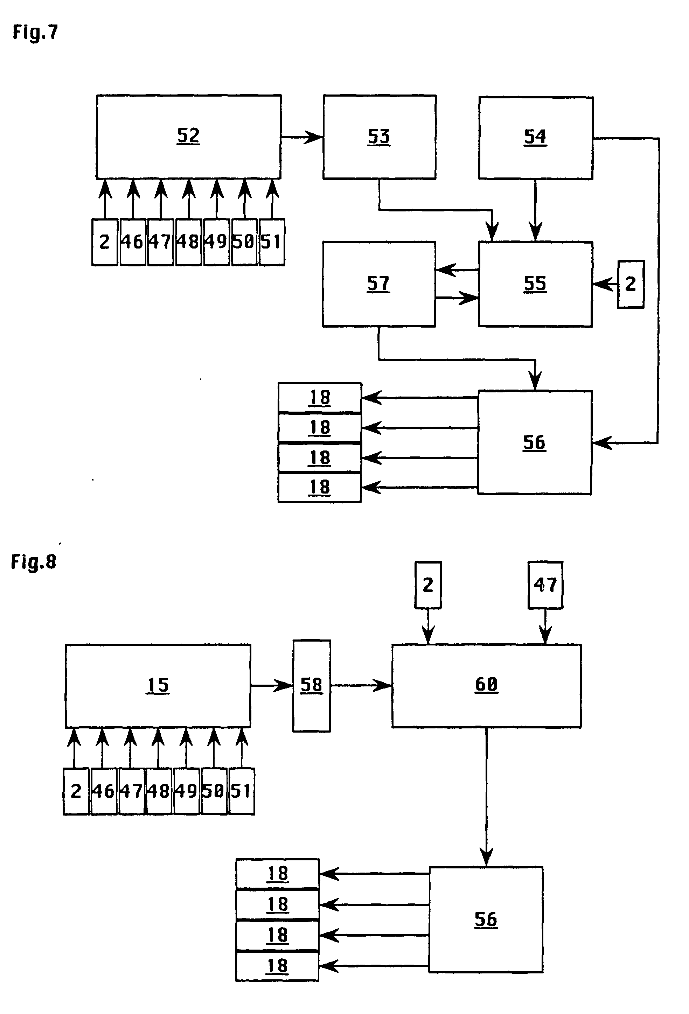

A first embodiment of the unit 6 is shown in Fig.7; the oxygen sensors 2, the cooling water temperature sensor 46, the throttle valve angular position sensor 47, the sensor 48 of the vacuum in the intake manifold downstream of the throttle valve 8, the engine revolution speed sensor 49, the sensor 50 of the temperature of the air sucked by the engine 1 and the sensor 51 of the flow-rate of the air sucked by the engine 1 are connected to their own interface networks 52 which change the signals of said sensors into electrical quantities suitable for the networks and electronic components of the unit 6.

An amplifying network 53 amplifies the electrical quantities coming from the interface networks 52 and supplies the electrical power required by the unit 6 to execute the successive processing of said electrical quantities.

A memory network 54 stores the operating diagrams of the engine on the basis of any possible load condition, operating state, revolution speed and the like. The memory network 54 is connected to a comparing network 55 which compares the values of the signals coming from the oxygen sensors 2 of each combustion chamber 37 with pre-established values, which may change according to the engine operating condition in order to maintain the strength value of the mixture supplied by the injection valves 18 equal or close to the stoichiometric value.

An additional memory network 57 is provided storing the possible deviations of the values of the control signals, sent by the memory network 54 to the injection valves 18 of each combustion chamber 37, from the values which guarantee a mixture strength equal or close to the stoichiometric value; the additional memory network 57 replaces the memory network 54, if said deviations repeatedly occur in order to vary the control signals for the injection valves 18 on the basis of the actual oxygen sensors values which can change, for example, if a gas mixture is used being different from that used during the storing phase of the operating diagrams in the memory network 54 (or for other known causes). An operating network 56 controlled by the memory network 54 or additional memory network 57 sends the operating signals to the injection valves 18, said operating signals processed on the basis of the diagrams stored in the memory network 54 or corrected by the additional memory network 57.

The equipment further comprises a commutator used for feeding the engine 1 with the fuel contained in the tank 11 or with the liquid fuel contained in the tank usually supplied to the vehicle; the commutation is controlled by the driver or by the equipment automatically.

In addition, a programming terminal (computer) is provided to program the central control unit 6 during the equipment tuning, so that the memory network 54 stores the operating diagrams of the engine by examining any possible engine operating condition. For each operating condition the most suitable fuel flow-rate for that particular condition is defined as regards economic consumption, pollutants concentration and, in general, the engine performances. An operating diagram of the engine in n dimensions is obtained; in every curve of the diagram the relation between the operating condition and the flow-rate of fuel to be sent to the engine is established in accordance with the parameters measured by the various sensors.

The curves may be modified on the basis of the data stored, every time, by the additional memory network 57.

The central control unit 6 presents entrances connected to the oxygen sensors 2 and the other sensors, in addition, it is fed by a battery. The central control unit 6 is controlled by a microprocessor capable of processing thousands data per second in order to obtain a correct equipment operating. For processing the operating and control programs of the equipment the main engine operating parameters are considered, in particular the revolution speed, the throttle valve angular position, the vacuum in the intake manifold 7 downstream of the throttle valve 8, the cooling water temperature, and the values of the oxygen sensors signals.

These parameters are processed by the central control unit 6 for controlling the working of the injection valves 18 in any engine operating condition. Each injection valve 18 is separately controlled to solve eventual operating problems of its own combustion chamber for optimizing the mixture strength considering the concentration of pollutants and engine performances.

The processing and control algorithms are calculated on the basis of diagrams or tables stored during the equipment tuning by means of a calibration procedure controlled and assisted by a computer; said procedure consisting of measuring said parameters during the various engine operating states.

Self-regulating and self-learning techniques in the long run guarantee the optimal adjusting of the tables in accordance with the parameter variations.

Therefore, in one embodiment the additional memory network 57 loses all data when the engine 1 stops; in another embodiment the additional memory network 57 maintains the data also after the stopping of the engine 1.

Possible errors or malfunctioning in the gas injection equipment are permanently stored by the central control unit 6 to allow aimed diagnosis and tuning during the service phase. If the pre-established values of the oxygen sensors 2 are not reached owing to failures, errors of the central control unit 6 or low-grade gas mixtures, the central control unit 6 automatically changes to feed the engine with liquid fuel and warns the driver.

A second embodiment of the central control unit is shown in Fig.8; the oxygen sensors 2, the cooling water temperature sensor 46, the throttle valve angular position sensor 47, the sensor 48 of vacuum in the intake manifold downstream of the throttle valve 8, the engine revolution speed sensor 49, the sensor 50 of the temperature of the air sucked by the engine 1, and the sensor 51 of the flow-rate of the air sucked by the engine 1 are connected to an electrical control unit 15 originally installed in the vehicle. A central control unit 60 is connected to the electrical control unit 15 by means of an interface network 58 and presents entrances for both the oxygen sensors 2 and throttle valve angular position sensor 47 together with an outlet for the acting of the operating network 56 on the injection valves 18.

For feeding the engine 1 with the gaseous fuel the central control unit 60 receives all data required for its operating from the electrical control unit 15 originally installed in the vehicle by measuring the starting time and length of the injection periods processed by the electrical control unit 15 for the liquid fuel injection valves.

The change of the engine feeding of a vehicle from the original liquid fuel feeding to the gas feeding occurs disjoining a part of the electrical control unit 15 and enabling the equipment according to the invention to directly send the gas into the inlet pipe 16 near the inlet valve 36.

In fact, the electrical control unit 15 is not completely disjoined; only the devices controlling the liquid fuel injection valves are disjoined; this occurs since, when the engine is fed with the gaseous fuel, some main engine operating parameters come from the electrical control unit 15 which controls all engine operating parameters; therefore, the electrical control unit 15 is also capable of controlling the right ignition sequence. The injection time sequences (opening starting instant and length of the injection) are the result of the processing of all parameters known, in every instant, by the electrical control unit 15.

In every engine operating instant, the electrical control unit 15 processes the injection time sequences on the basis of the following parameters: engine revolution speed, pressure in the intake manifold and/or flow-rate of sucked air, cooling water temperature, sucked air temperature, values of the oxygen sensors signals, throttle valve angular position. Once the injection time sequences and the engine operating diagrams are defined, it is also possible to define the values of said parameters in a one-one correspondence.

The main result of this processing is the sending of an opening control signal to the liquid fuel injection valves, said control signal determining, in every instant, the flow-rate of gaseous fuel to be sent to the combustion chambers 37.

The central control unit 60 is capable of using, during the gas feeding, the result of the processing of the data processed by the electrical control unit 15; in fact, the central control unit 60 exactly measures the opening starting instant and length of the injection for the liquid fuel injection valves and, after suitable processing by means of algorithms and diagrams, changes these data into a control signal for that gas injection valve feeding the engine 1 in that instant.

Thus, it is possible to obtain a universal adjustment capable of controlling the gas feeding of an engine made to be fed with a liquid fuel; this adjustment allows a simple extremely exact control of the engine considering all engine operating parameters, without the necessity to use a series of sensors which would give only the data already stored for processing the opening starting instant and length of the injection.

In addition, the type of obtained control is suitable for any engine type and innovative operating programs as regards both the best drivability, operating economy and reduction of pollutants coming out of the engine.

If particular performances are required, or if it is not possible to exactly calculate the control parameters for the gas injection valves by only measuring the starting time and length of the control signals sent by electrical control unit 15 to the liquid fuel injection valves, the above operating is integrated by directly considering the signals of some sensors originally installed in the engine.

The sensors used may be various, but it is possible to use only the throttle valve angular position and the oxygen sensors.

Compared to the operating of the previous embodiment, the operating of this embodiment is more flexible and free allowing individual programs for obtaining control algorithms for both enriching the mixture strength in full load or acceleration and cutting off the feeding in the decelerating phases.

For particular requirements, this adjustment obtains improved control programs, since it allows the use of the equipment in supercharged or sports engines.

The control units are made for being controlled by both the assembler, by means of a suitable processor or personal computer and by a remote control using a modem. They are also fitted with a self-regulating software allowing the automatic calculation of almost all operating parameters by measuring the engine operating data when the engine is fed by the liquid fuel and adapting the operating parameter values for feeding the engine with the gaseous fuel.

The programming processor shows the operating parameters values on an alphanumeric screen, said parameters being read by the central control unit 6 (60) in real time; in addition, the programming processor allows to set the regulation by means of a controlled rigid sequence or by acting on one particular parameter.

This operating method allows an optimal programming of the central control unit for all operating requirements even if the operator is not skilled and, when necessary, a diagnosis with a remote control of the installation, during the tuning or revision phase, effected by a service centre capable of detecting and properly adjusting all operating parameters by means of a controlled procedure.

The continuous flow injection equipment also operates by means of a central control unit having an incorporated pressure sensor for sensing the load applied to the engine; the central control unit processes the engine data such as the signals of air and water temperature sensors, the signal of the throttle valve angular position sensor, the signals of the oxygen sensors, the signal of the engine revolution speed sensor.

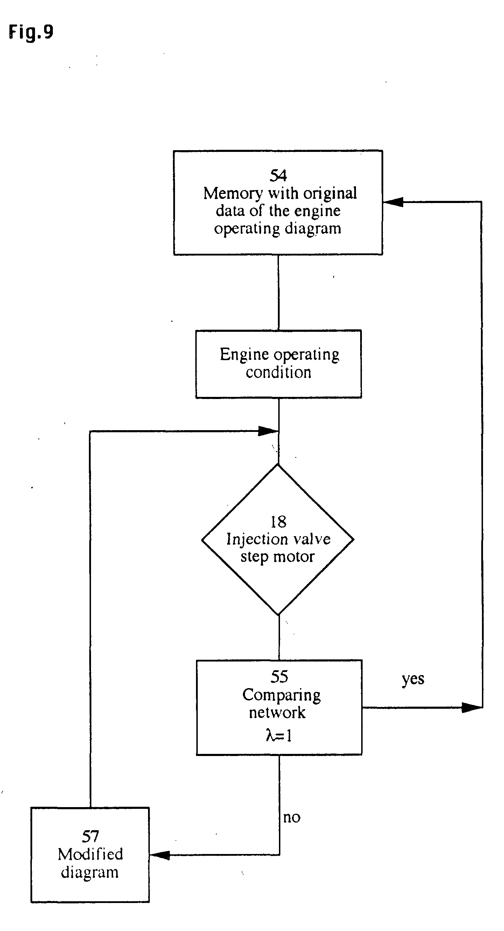

The flow chart of Fig.9 shows the operating of the central control unit 6 (60) as regards its self-regulating and self-learning.

The memory network 54, in any engine operating condition, sends a control signal to the step motor of each injection valve 18; the comparing network 55 verifies if the value of the signal of the oxygen sensor 2 is equal to the pre-established value for that particular engine operating condition; if this occurs, the memory network 54 maintains the control of the step motor. Vice-versa, the comparing network 55 sends a correcting signal to the additional memory network 57 storing the deviation of the value of the control signal, sent by the memory network 54 to the injection valve 18 of each combustion chamber 37, from the value which guarantees a mixture strength equal or close to the stoichiometric value, and successively the additional memory network 57 controls the step motor on the basis of the corrected data.

## Claims

1. Equipment for feeding an internal combustion engine with a gaseous fuel, comprising an engine (1) working with a gaseous fuel and presenting a number of combustion chambers (37), an intake manifold (7) having branches (16) forming inlet pipes, each connected to its own combustion chamber (37), a feeding system for the gaseous fuel, a system (10,7,16) for sending air to the engine (1), a throttle valve (8) for controlling the flow rate of the air sucked by the engine (1), a plurality of injection valves (18) metering and sending the gaseous fuel to the combustion chambers (37), each injection valve (18) being connected to, its own combustion camber, at least an oxygen sensor (2) placed in the exhaust system of the engine, a plurality of sensors measuring the operating parameters of the engine (1), said sensors being connected to a permanent memory central control unit (6) acting, in every instant, on the injection valves (18) in accordance with the operating parameters of the engine (1) measured by said sensors, **characterised by** the fact that each injection valve (18) consists of a metering valve (12) connected to a pressure reducer (9) and a timed valve (13) having a control chamber (30,39) only connected to the intake manifold upstream of the throttle valve (8), a connecting pipe (25) joining the metering valve (12) to the timed valve (13), while a delivery tube (35,43) connects the timed valve (13) to the inlet pipe (16) so that each injection valve (12,13,18) can send the gaseous fuel near the inlet valve (36) of its own combustion chamber (37).

2. Equipment as in claim 1, wherein each metering valve (12) consists of a body (19) supporting a step motor (20) electrically connected to the unit 6 (60); a passage section (21) for the gas being defined inside the body (19); the passage section (21) being controlled by a movable shutter (22) shaped like a truncated-cone mechanically connected to the step motor (20); the passage section (21) being located between an inlet (23) connected to the pressure reducer (9) and an outlet (24) connected to the timed valve (13); the area of the passage section (21) varying with the displacement of the movable shutter (22) in order to adjust the flow rate of the gas to the variations of the engine operating parameters.

3. Equipment as in claim 1, wherein each timed valve (13) is connected to the outlet (24) of the metering valve (12) by means of the connecting pipe (25); the timed valve (13) consisting of a sealed box (28), were a diaphragm (29) is found, said diaphragm (29) dividing the box (28) into two separated chambers (30,31) not communicating to each other; the first chamber (30) being connected to the intake manifold (7) upstream of the throttle (8) by means of canalisation (14,32), while the second chamber (31) is connected to the outlet (24) of the metering valve (12) by means of the connecting pipe (25); a plate (33) integral with the diaphragm (29) acting on the outlet orifice (34) of a delivery tube (35) connecting the second chamber (31) to the inlet pipe (16) because of the vacuum existing inside the inlet pipe (16) upstream of the inlet valve (36); when the inlet valve (36) is open, the plate (33) closes the outlet orifice (34), since the difference between the pressure inside the inlet pipe (16) and the pressure inside the second chamber (31) is high; when the inlet valve (36) is closed, the plate (33) opens the outlet orifice (34) since said difference is low; when the outlet orifice (34) is open, the gas metered by the metering valve (12) through the inlet pipe (16) accumulates near the inlet valve (36) to enter the combustion chamber (37) together with the air coming from the intake manifold (7) during the opening phase of the inlet valve (36); while, when the outlet orifice (34) is closed the gas does not come out of the chamber (31).

4. Equipment as in claim 1, wherein each timed valve (13) consists of a sealed box (38); two chambers that is: a third chamber (39) and a fourth chamber (40) inside the box (38) are hermetically separated by a thin elastic plate (41) deforming when stressed by the forces of the pressure existing in the chambers (39,40); the third chamber (39) is connected to the intake manifold (7) upstream of the throttle valve (8) by means of the canalisation (32), while the fourth chamber (40) is connected to the outlet (24) of the timed valve (13) by means of the connecting pipe (25); two tubes (42,43) introduced into the fourth chamber (40); inlet tube (42) is joined to the connecting pipe (25), while the delivery tube (43) connects the fourth chamber (40) to the inlet pipe (16) upstream of the inlet valve (36); an inlet orifice (44) opens at the end of the delivery tube (43) located inside the fourth chamber (40), while an outlet orifice (45) opens at the end of the inlet tube (42) introduced into the fourth chamber (40); the plate (41) is shaped so that it faces its concavity downwards when the pressure in the fourth chamber (40) is higher than the pressure in the third chamber (39) in order to maintain the two orifices (44,45) open; the plate (41) facing its concavity upwards when the pressure in the fourth chamber (40) is lower than the pressure in the third chamber (39) in order to close the orifices (44,45); in both geometrical configurations the plate (41) adheres to the internal wall of the box (28), so that the third chamber (39) is maintained isolated from the fourth chamber (40); when the inlet valve (36) is closed the pressure in the fourth chamber (40) is higher than the pressure in the third chamber (39) and the plate (41) faces its concavity downwards; therefore, the gas metered by the metering valve (12) through the inlet pipe (16) accumulates near the inlet valve (36) to enter the combustion chamber (37) together with the air coming from the intake manifold (7) during the opening phase of the inlet valve (36); when the inlet valve (36) is open the pressure in the fourth chamber (40) is lower than the pressure in the third chamber (39) and the plate (41) faces its concavity upwards in order to close the orifices (42,44).

5. Equipment as in claim 1, wherein the central control unit (6) comprises a memory network (54) capable of storing the engine operating diagrams on the basis of any load condition, operating state, revolution speed and the like; the memory network (54) being connected to a comparing network (55) which compares the values of signals of the oxygen sensors (2) of each combustion chamber (37) with pre-established values, so that the strength of the mixture delivered by the injection valves (18) is equal or close to the stoichiometric value; an additional memory network (57) being further provided for storing the possible deviations of the values of the control signals, sent by the memory network (54) to the injection valves (18) of each combustion chamber (37), from the values which guarantee a mixture strength equal or close to the stoichiometric value; if said deviations occur, the additional memory network (57) replaces the memory network (54) in order to vary the control signals for the injection valves (18) on the basis of the actual values of the oxygen sensors (2), which change if the gas mixture is different from that used during the memorising phase of the operating diagrams in the memory network (54); an operating network (56), controlled by the memory network (54) or additional memory network (57), sends the control signals to the injection valves (18), said control signals being processed on the basis of the diagrams stored in the memory network (54) or corrected by the additional memory network (57).

6. Equipment as in claim 1, wherein the central control unit (60) is connected to an electrical control unit (15) originally installed in the vehicle for receiving signals which define, in every moment, the position of the movable shutter (22) in accordance with the operating parameters of the engine (1) processed by the electrical control unit (15).

7. Equipment as in claim 6, wherein the central control unit (60) is connected to a throttle valve angular position sensor and to the oxygen sensors (2) for controlling the movable shutter (22) on the basis of the signal values of these sensors in order to consider the type of fuel used and other causes.

8. Equipment as in claim 1, wherein the central control unit (6) is also capable of permanently storing the possible errors or malfunctioning of the gas injection equipment to permit aimed diagnosis and interventions during the service phase; if the pre-established values of the oxygen sensors (2) are not reached owing to failures, errors of the central control unit (6) or low-grade gas mixtures, the central control unit (6) automatically changes to feed the engine with the liquid fuel and warns the driver.

9. Equipment as in claim 1, wherein a programming terminal is further provided to program the central control unit (6) during the equipment tuning so that the memory network (54) stores the operating diagrams of the engine (1) considering every possible engine operating condition; for each operating condition the most suitable fuel flow rate for that particular condition is defined as regards economic consumption, pollutants concentration and, in general, the engine performances; an operating diagram of the engine in n dimensions is obtained; in every curve of the diagram the relation between the operating condition and the flow rate of fuel to be sent to the engine is established in accordance with the parameters measured by the various sensors.

10. Equipment as in claim 1, wherein an amplifying network (53) is further provided which amplifies the electrical quantities coming from interface networks (52) which change the signals of said sensors into said electrical quantities, and supplies the electrical power required by the unit (6,60) to execute the successive processing of said electrical quantities.

## Patentansprüche

1. Vorrichtung zur Speisung einer Brennkraftmaschine mit gasförmigem Brennstoff, wobei die Vorrichtung eine Brennkraftmaschine (1) enthält, die durch gasförmigen Brennstoff betätigt wird, und wobei die Brennkraftmaschine (1) eine Anzahl Verbrennungskammer (37) aufweist, sowie einen Ansaugkrümmer (7), dessen Anschlüsse Ansaugleitungen (16) bilden, wobei jede Ansaugleitung (16) mit ihren Verbrennungskammern (37) verbunden ist; außerdem sind folgende Bestandteile vorgesehen: ein Speisungssystem für den gasförmigen Brennstoff, ein System (10,7,16) zum Senden der Luft an die Brennkraftmaschine (1), eine Drosselklappe (8) zum Steuern der Durchflussmenge der durch die Brennkraftmaschine (1) angesaugte Luft, mehrere Einspritzungsventile (18), die den gasförmigem Brennstoff an die Verbrennungskammern (37) zumessen und senden, wobei jedes Einspritzungsventil (18) an seine Verbrennungskammer angeschlossen ist, zumindest ein in Abgaskrümmer der Brennkraftmaschine angeordneter Sauerstofffühler (2), mehrere Fühler zum Abmessen der Betriebsparameter der Brennkraftmaschine (1), wobei die Fühler an einer dauerspeicherartigen zentralen Kontrolleinheit (6) angeschlossen ist, die auf die Einspritzungsventile (18) je Augenblick gemäß der Betriebsparameter der Brennkraftmaschine (1) wirken, die durch die Fühler gemessen werden, **dadurch gekennzeichnet, daß** jedes Einspritzungsventil (18) aus einem Zumessenventil (12), angeschlossen an einem Verdampfer-Druckregler (9), und einem Einstellungsventil (13) besteht; wobei das Einstellungsventil (13) eine Steuerungskammer (30,39) aufweist, die nur am Ansaugkrümmer stromaufwärts der Drosselklappe (8) angeschlossen ist, eine Verbindungsleitung (25) verbindet das Zumessenventil (12) mit dem Einstellungsventil (13), und ein Vorlaufrohr (35,43) verbindet das Einstellungsventil (13) mit dem Eingangsrohr (16), damit jedes Einspritzungsventil (12,13,18) den gasförmigen Brennstoff in der Nähe des Ansaugventils (36) seiner Verbrennungskammer (37) senden kann.

2. Vorrichtung nach Anspruch 1, **dadurch gekennzeichnet, daß** jedes Zumessenventil (12) aus einem Körper (19) besteht, der einen an der Einheit (6,60) elektrisch angeschlossenen Schrittmotor (20) hält; ein Durchgangsabschnitt (21) für das Gas ist innerhalb des Körpers (19) beschränkt; der Durchgangsabschnitt (21) wird durch einen beweglichen Kegelschieber (22), mechanisch verbunden mit dem Schrittmotor (20) gesteuert; der Durchgangsabschnitt (21) ist zwischen einem Eingangsabschnitt (23), verbunden mit dem Verdampfer-Druckregler (9), und einem Ausgangsabschnitt (24), verbunden mit dem Einstellungsventil (13), angeordnet; wobei die Fläche des Durchgangsabschnittes (21) mit der Versetzung des beweglichen Schiebers (22) ändert, damit die Durchflussmenge des Gases gemäß der Änderungen der Betriebskenngrößen der Maschine geregelt ist.

3. Vorrichtung nach Anspruch 1, **dadurch gekennzeichnet, daß** jedes Einstellungsventil (13) am Ausgangsabschnitt (24) des Zumessenventil (12) durch die Verbindungsleitung (25) angeschloßen ist; das Einstellungsventil (13) besteht aus einer gesiegelten Kiste (28), wo sich eine Membran (29) befindet, wobei die Membran (29) die Kiste (28) in zwei getrennten Kammern (30,31), die miteinander nicht verbunden sind, teilt; die erste Kammer (30) ist mit dem Ansaugkrümmer (7) stromaufwärts der Drosselklappe (8) durch eine Leitung (14,32) verbunden, während die zweite Kammer (31) am Ausgangsabschnitt (24) des Zumessenventils (12) durch die Verbindungsleitung (25) angeschloßen ist; eine Platte (33), befestigt an der Membran (29), wirkt auf der Ausgangsöffnung (34) eines Vorlaufrohres (35), das die zweite Kammer (31) mit dem Eingangsrohr (16) verbindet, wegen des Vakuums, das innerhalb des Eingangsrohres (16) stromaufwärts des Ansaugventils (36) herrscht; wenn das Ansaugventil (36) geöffnet ist, schließt die Platte (33) die Ausgangsöffnung (34), da die Differenz zwischen dem Druck innerhalb des Eingangsrohres (16) und dem Druck innerhalb der zweiten Kammer (31) hoch ist; wenn das Ansaugventil (36) geschlossen ist, öffnet die Platte (33) die Ausgangsöffnung (34), da die Differenz niedrig ist; wenn die Ausgangsöffnung (34) geöffnet ist, häuft sich das durch das Zumessenventil (12) gemessene Gas in der Nähe des Ansaugventils (36) durch das Eingangsrohr (16), um in die Verbrennungskammer (37) zusammen mit der Luft einzudringen, die vom Ansaugkrümmer (7) während der Öffnungsphase des Ansaugventils (36) stammt; dagegen, wenn die Ausgangsöffnung (34) geschlossen ist, kommt das Gas aus der Kammer (31) nicht.

4. Vorrichtung nach Anspruch 1, **dadurch gekennzeichnet, daß** jedes Einstellungsventil (13) aus einer gesiegelten Kiste (38) besteht; zwei Kammern d.h.: eine dritte Kammer (39) und eine vierte Kammer (40) innerhalb der Kiste (38) sind durch eine dünne elastische Platte (41) hermetisch getrennt, die sich verformen, falls sie durch die Kräfte des Drucks der Kammern (39,40) beansprucht werden; die dritte Kammer (39) ist mit der Ansaugkrümmer (7) stromaufwärts der Drosselklappe (8) durch die Leitung (32) verbunden, dagegen ist die vierte Kammer (40) mit dem Ausgangsabschnitt (24) des Einstellungsventils (13) durch die Verbindungsleitung (25) verbunden; zwei Röhren (42,43) sind in der vierten Kammer (40) aufgenommen; die Eingangsröhre (42) ist mit der Verbindungsleitung (25) verbunden, dagegen verbindet das Vorlaufrohr (43) die vierte Kammer (40) mit dem Eingangsrohr (16) stromaufwärts des Ansaugventils (36); eine Eingangsöffnung (44) ist am Ende des innerhalb der vierten Kammer (40) angeordneten Vorlaufrohres (43) vorgesehen, dagegen öffnet sich eine Ausgangsöffnung (45) am Ende der Eingangsröhre (42), aufgenommen in der vierten Kammer (40); die Platte (41) ist so gebildet, daß sie ihre Konkavität abwärts richtet, falls der Druck in der vierten Kammer (40) höher ist, als der Druck in der dritten Kammer (39), um beide Öffnungen (44,45) geöffnet zu halten; wobei die Platte (41) ihre Konkavität aufwärts richtet, falls der Druck in der vierten Kammer (40) niedriger ist, als der Druck in der dritten Kammer (39), um die Öffnungen (44,45) zu sperren; in beiden geometrischen Gestaltungen klebt die Platte (41) an der inneren Wand der Kiste (28) so, daß die dritte Kammer (39) von der vierten Kammer (40) getrennt gehalten wird; falls das Ansaugventil (36) gesperrt ist, ist der Druck in der vierten Kammer (40) höher, als der Druck in der dritten Kammer (39); die Platte (41) richtet ihre Konkavität abwärts, deshalb häuft sich das durch das Zumessenventil gemessene Gas (12) in der Nähe des Ansaugventils (36) durch das Eingangsrohr (16), um in die Verbrennungskammer (37) zusammen mit der Luft einzudringen, die vom Ansaugkrümmer (7) während der Öffnungsphase des Ansaugventils (36) stammt; falls das Ansaugventil (36) geöffnet ist, ist der Druck in der vierten Kammer (40) niedriger, als der Druck in der dritten Kammer (39) und die Platte (41) richtet ihre Konkavität aufwärts, um die Öffnungen (42,44) zu sperren.

5. Vorrichtung nach Anspruch 1, **dadurch gekennzeichnet, daß** die zentralen Kontrolleinheit (6) einen Speicherkreis (54) enthält, der geeignet ist, die Betriebsdiagramme der Brennkraftmaschine auf Grund jedes Beladungs-und-Betriebszustandes, Drehgeschwindigkeit u.s.w. zu speichern; der Speicherkreis (54) ist mit einem Vergleichskreis (55) verbunden, der die Werte der Signale der Sauerstofffühler (2) jeder Verbrennungskammer (37) mit vorbestimmten Werten so vergleicht, daß der Titer des durch die Einspritzungsventile (18) gelieferten Gemisches an die stöichiometrische Zusammensetzung gleich oder sehr nahe ist; außerdem ist ein zusätzlicher Speicherkreis (57) vorgesehen, der die möglichen Abweichungen der Werte der Kontrollsignale speichert, die durch den Speicherkreis (54) an die Einspritzungsventile (18) jeder Verbrennungskammer (37) gesendet werden, von den Werten, die einen an die stöichiometrische Zusammensetzung gleicher oder sehr naher Titer des Gemisches sichern; falls die Abweichungen stattfindet, wechselt der zusätzliche Speicherkreis (57) den Speicherkreis (54) aus, damit die Kontrollsignale der Einspritzungsventile (18) auf Grund der echten Werte der Sauerstofffühler (2) angepasst werden, die ändern, falls das Gemisch von jenes, das während der Speicherphase des Betriebsdiagrams im Speicherkreis (54) verwendet wurde, verschieden ist; ein Betriebskreis (56), kontrolliert durch den Speicherkreis (54) oder den zusätzlichen Speicherkreis (57), sendet die Kontrollsignale an die Einspritzungsventile (18), wobei die Kontrollsignale auf Grund der im Speicherkreis (54) gespeicherten oder durch den zusätzlichen Speicherkreis (57) korrigierten Diagramme bearbeitet sind.

6. Vorrichtung nach Anspruch 1, **dadurch gekennzeichnet, daß** die zentrale Kontrolleinheit (60) mit einer elektrischen Kontrolleinheit (15) verbunden ist, montiert im Fahrzeug ursprünglich, um Signale zu empfangen, welche die Stellung des beweglichen Schiebers (22) in Abhängigkeit von den Betriebsparametern der Brennkraftmaschine (1) in jedem Augenblick bestimmen, bearbeitet durch die elektrische Kontrolleinheit (15).

7. Vorrichtung nach Anspruch 6, **dadurch gekennzeichnet, daß** die zentrale Kontrolleinheit (60) mit einem Fühler der Winkelstellung der Drosselklappe und mit dem Sauerstofffühler (2) verbunden ist, damit der bewegliche Schieber (22) auf Grund der Werte der Signale dieser Fühler kontrolliert wird, um die verwendete Brennstoffsorte und weitere Ursachen zu berücksichtigen.

8. Vorrichtung nach Anspruch 1, **dadurch gekennzeichnet, daß** die zentrale Kontrolleinheit (6) auch geeignet ist, die möglichen Fehler oder Betriebsausfälle der Gaseinspritzungsanlage dauernd zu speichern, um gezielte Betriebsprüfungen und Eingriffe während der Erhaltungsphase zu permettere; falls die vorbestimmte Werte der Sauerstofffühler (2) wegen Schaden, Fehler der zentrale Kontrolleinheit (6) oder minderwertiger Gasgemische nicht erreicht werden, geht die zentrale Kontrolleinheit (6) auf die Speisung der Brennkraftmaschine mit dem flüssigen Brennstoff automatisch über, und warnt den Fahrer.

9. Vorrichtung nach Anspruch 1, **dadurch gekennzeichnet, daß** ein Programmierungsterminal weiter vorgesehen ist, um die zentrale Kontrolleinheit (6) während des Einstellens der Vorrichtung so programmieren, daß der Speicherkreis (54) die Betriebsdiagramme der Brennkraftmaschine (1) gemäß aller möglicher Betriebszustände der Brennkraftmaschine speichert; für jeden Betriebszustand wird die geeigneteste Brennstoffdurchflussmenge für jenen besonderen Zustand bestimmt, hinsichtlich des preisgünstigen Brennstoffverbrauches, Konzentration der Schadstoffe und, in allgemein, der Leistungen der Brennkraftmaschine; ein Betriebsdiagramme der Brennkraftmaschine mit n Dimensionen ist erreicht; in jeder Kurve des Diagramms ist die Beziehung zwischen dem Betriebszustand und der Durchflussmenge des an die Brennkraftmaschine sendenden Brennstoffes gemäß der durch die verschiedenen Fühler gemessenen Parameter bestimmt.

10. Vorrichtung nach Anspruch 1, **dadurch gekennzeichnet, daß** ein Verstärkerschaltung (53) weiter vorgesehen ist, welche die von Schnittstellenkreisen (52) stammenden elektrischen Größen verstärkt, welche die Signale der Fühler zu den elektrischen Größen abändern, wobei der Verstärkerschaltung (53) die elektrischen Leistungspegel liefert, die notwendig sind, die darausfolgenden Verarbeitungen der elektrischen Größen durch die Kontrolleinheit (6,60) zu erlauben.

## Revendications

1. Equipement pour alimenter un moteur à combustion interne en carburant gazeux, comprenant: un moteur (1) qui utilise un carburant gazeux et qui présente des chambres de combustion (37), un collecteur d'admission (7) ayant des branchements (16) qui forment des conduits d'admission, chaque conduit est joint à sa propre chambre de combustion (37), un système d'alimentation pour le carburant gazeux, un système (10,7,16) pour envoyer de l'air au moteur (1), un papillon des gaz (8) pour contrôler le début de l'air aspirée par le moteur (1), une pluralité de vannes d'injection (18) qui dosent et envoient le carburant gazeux aux chambres de combustion (37), chaque vanne d'injection (18) est jointe à sa propre chambre de combustion, au moins un capteur d'oxygène (2), logé dans l'échappement du moteur, une pluralité de capteurs qui mesurent les paramètres de fonctionnement du moteur (1), ces capteurs sont joints à une unité centrale de contrôle à memoire permanente (6) qui agit, à tout instant, sur les vannes d'injection (18) en fonction des paramètres de fonctionnement du moteur (1) mesurés par les capteurs; l'equipement est **caractérisé en ce que** chaque vanne d'injection (18) consiste d'une vanne de dosage (12) jointe à un détenteur de pression (9) et d'une vanne de calage (13) qui présente une chambre de contrôle (30,39) jointe seulement au collecteur d'admission en amont du papillon des gaz (8), un tube de connexion (25) joint la vanne de dosage (12) à la vanne de calage (13), alors que un tube de refoulement (35,43) joint la vanne de dosage (13) à la canalisation d'admission (16) de manière que chaque vanne d'injection (12,13,18) puisse envoyer le gaz à proximité de la vanne d'admission (36) de sa propre chambre de combustion (37).

2. Equipement selon la revendication 1, **caractérisé en ce que** chaque vanne de dosage (12) consiste d'un corps (19) qui soutient un moteur pas à pas (20) électriquement joint à l'unité (6, 60); une section de passage (21) pour le gaz est définie dans le corps (19); la section de passage (21) est contrôlée par une fermeture mobile (22), en forme de cône, mécaniquement jointe au moteur pas à pas (20); la section de passage (21) est logée entre une entrée (23) jointe au détecteur de pression (9) et une sortie (24) jointe à la vanne de calage (13); l'area de la section de passage (21) varie selon le déplacement de la fermeture mobile (22) pour régler le début du gaz en fonction des variations des paramètres de fonctionnement du moteur.

3. Equipement selon la revendication 1, **caractérisé en ce que** chaque vanne de calage (13) est jointe à la sortie (24) de la vanne de dosage (12) par le tube de connexion (25); la vanne de calage (13) consiste d'une boîte d'étanchéité (28) dans laquelle se trouve une membrane (29), cette membrane (29) divise la boîte (28) en deux chambres séparées (30,31) qui ne sont pas en communication entre eux; la première chambre (30) est jointe au collecteur d'admission (7) en amont du papillon (8) à travers la canalisation (14,32), alors que la seconde chambre (31) est jointe à la sortie (24) de la vanne de dosage (12) à travers le tube de connexion (25); un plat (33) solidaire à la membrane (29) agit sur l'orifice de sortie (34) d'un tube de refoulement (35) qui joint la seconde chambre (31) au tube d'admission (16) à cause du vide existant dans le tube d'admission (16) en amont de la vanne d'admission (36); lorsque la vanne d'admission (36) est ouverte, le plat (33) ferme l'orifice de sortie (34), puisque la différence entre la pression dans le tube d'admission (16) et la pression dans la seconde chambre (31) est élevée; lorsque la vanne d'admission (36) est fermée, le plat (33) ouvre l'orifice de sortie (34) puisque la même différence est basse; lorsque l'orifice de sortie (34) est ouvert, le gaz dosé par la vanne de dosage (12) à travers le tube d'admission (16) s'accumule à proximité de la vanne d'admission (36) pour entrer dans la chambre de combustion (37) avec l'air provenant du collecteur d'admission (7) pendant la phase d'ouverture de la vanne d'admission (36); lorsque l'orifice de sortie (34) est fermé le gaz ne sorte pas de la chambre (31).

4. Equipement selon la revendication 1, **caractérisé en ce que** chaque vanne de calage (13) consiste d'une boîte d'étanchéité (38); deux chambres, c'est à dire: une troisième chambre (39) et une quatrième chambre (40) dans la boîte (38) sont hermétiquement séparées par un plat mince et élastique (41) qui se déforme lorsqu'il est sollicité par des forces de pression existant dans les chambres (39,40); la troisième chambre (39) est jointe au collecteur d'admission (7) en amont du papillon des gaz (8) à travers la canalisation (32), alors que la quatrième chambre (40) est jointe à la sortie (24) de la vanne de calage (13) à travers le tube de connexion (25); deux tubes (42,43) sont introduits dans la quatrième chambre (40); le tube d'admission (42) est joint au tube de connexion (25), alors que le tube de refoulement (43) joint la quatrième chambre (40) au tube d'admission (16) en amont de la vanne d'admission (36); un orifice d'admission (44) s'ouvre à l'extrémité du tube de refoulement (43) logé dans la quatrième chambre (40), alors que un orifice de sortie (45) s'ouvre à l'extrémité du tube d'admission (42) introduit dans la quatrième chambre (40); le plat (41) est formé de manière qu'il tourne sa concavité vers le bas lorsque la pression dans la quatrième chambre (40) est plus élevée que la pression dans la troisième chambre (39) pour maintenir les deux orifices (44,45) ouverts; le plat (41) tourne sa concavité vers l'haut lorsque la pression dans la quatrième chambre (40) est plus basse que la pression dans la troisième chambre (39) pour fermer les orifices (44,45); dans les deux configurations géométriques le plat (41) adhère à la paroi interne de la boîte (28), de manière que la troisième chambre (39) reste isolée de la quatrième chambre (40); lorsque la vanne d'admission (36) est fermée la pression dans la quatrième chambre (40) est plus élevée que la pression dans la troisième chambre (39) et le plat (41) tourne sa concavité vers le bas; de cette façon, le gaz dosé par la vanne de dosage (12) à travers le tube d'admission (16) s'accumule à proximité de la vanne d'admission (36) pour entrer dans la chambre de combustion (37) avec l'air provenant du collecteur d'admission (7) pendant la phase d'ouverture de la vanne d'admission (36); lorsque la vanne d'admission (36) est ouverte la pression dans la quatrième chambre (40) est plus basse que la pression dans la troisième chambre (39) et le plat (41) tourne sa concavité vers l'haut pour fermer les orifices (42,44).

5. Equipement selon la revendication 1, **caractérisé en ce que** l'unité centrale de contrôle (6) comprend un circuit de mémoire (54) capable de mémoriser les diagrammes opérationnels du moteur dans toutes les conditions de charge, conditions opérationnelles, vitesse de révolution etc.; le circuit de mémoire (54) est joint à un circuit de comparaison (55) qui compare les valeurs des signaux des capteurs d'oxygène (2) de chaque chambre de combustion (37) avec des valeurs fixées à l'avance de manière que le dosage du mélange fourni par les vannes d'injection (18) soit égal ou près de la valeur stoechiométrique; en plus, un circuit de mémoire additionnel (57) est pourvu pour mémoriser les écarts éventuels des valeurs des signaux de contrôle, envoyés par le circuit de mémoire (54) aux vannes d'injection (18) de chaque chambre de combustion (37), des valeurs qui garantissent le dosage du mélange égual ou près de la valeur stoechiométrique; si ces écarts se répètent, le circuit de mémoire additionnel (57) remplace le circuit de mémoire (54) pour varier les signaux de contrôle pour les vannes d'injection (18) selon les valeurs réelles des capteurs d'oxygène (2), qui varient si le mélange du gaz est différent de celui utilisé pendant la phase de mémorisation des diagrammes opérationnels dans le circuit de mémoire (54); un circuit opérationnel (56), contrôlé par le circuit de mémoire (54) ou par le circuit de mémoire additionnel (57), envoie les signaux de contrôle aux vannes d'injection (18), ces signaux de contrôle sont élaborés selon les diagrammes mémorisés dans le circuit de mémoire (54) ou corrigés par le circuit de mémoire additionnel (57).

6. Equipement selon la revendication 1, **caractérisé en ce que** l'unité centrale de contrôle (60) est jointe à une unité électrique de contrôle (15), originairement installée dans le véhicule, pour recevoir des signaux qui définissent, à tout instant, la position de la fermeture mobile (22) selon les paramètres opérationnels du moteur (1) élaborés par l'unité électrique de contrôle (15).

7. Equipement selon la revendication 6, **caractérisé en ce** l'unité centrale de contrôle (60) est jointe à un capteur de la position angulaire du papillon et aux capteurs d'oxygène (2) pour contrôler la fermeture mobile (22) selon les valeurs des signaux de ces capteurs en considérant le type du carburant utilisé et d'autres causes.

8. Equipement selon la revendication 1, **caractérisé en ce que** l'unité centrale de contrôle (6) est aussi capable de mémoriser d'une façon permanente les erreurs éventuelles ou le mal fonctionnement de l'equipement d'injection de gaz pour permettre des vérifications et des interventions déterminées pendant la phase de maintenance; si les valeurs fixées à l'avance des capteurs d'oxygène (2) ne sont pas atteints à cause de pannes, d'erreurs de l'unité centrale de contrôle (6) ou de mélanges du gaz bas de gamme, l'unité centrale de contrôle (6) passe automatiquement à alimenter le moteur en essence et elle avert le conducteur.

9. Equipement selon la revendication 1, **caractérisé en ce que** en plus un terminal de programmation est pourvu pour programmer l'unité centrale de contrôle (6) pendant la mise au point de l'equipement de manière que le circuit de mémoire (54) mémorise les diagrammes opérationnels du moteur (1) en considérant toutes les conditions opérationnelles possibles du moteur; pour chaque condition opérationnelle le débit du carburant le plus approprié est défini pour celle condition particulière en considérant l'économique consommation en carburant, la concentration des polluants et, en général, les performances du moteur; un diagramme opérationnel du moteur en n dimensions est obtenu; dans chaque courbe du diagramme la relation entre la condition opérationnelle et le débit du carburant à envoyer au moteur est définie selon les paramètres mesurés par les capteurs différents.

10. Equipement selon la revendication 1, **caractérisé en ce que** en plus un circuit d'amplification (53) est pourvu pour amplifier les quantités électriques provenant des circuits d'interface (52) qui transforment les signaux des capteurs en les quantités électriques; le circuit d'amplification fournit la puissance électrique necessaire à l'unité (6,60) pour exécuter l'élaboration suivante des quantités électriques.
